# EUROPEAN PATENT SPECIFICATION

(11) **EP 2 038 537 B1**
(45) Date of publication and mention of the grant of the patent: **29.02.2012**
(21) Application number: 07768914.9
(22) Date of filing: 03.07.2007
(51) Int. Cl.: F02M 21/02

(54) **SYSTEM FOR INJECTING LIQUID VAPOUR**
SYSTEM ZUR INJEKTION VON FLÜSSIGKEITSDAMPF
SYSTÈME POUR INJECTER DE LA VAPEUR LIQUIDE

(30) Priority: 03.07.2006 NL 2000123
(43) Date of publication of application: 25.03.2009
(73) Proprietor: Vialle Alternative Fuel Systems B.V., 5626 EA Eindhoven (NL)
(72) Inventor: TEN BROEKE, Sebastiaan, Martinus, Emanuel, 5492 NC Nijnsel (NL); VAN EIJCK, Petrus, Maria, 5575 CA Luyksgestel (NL); GROEN, Leendert, Rens, 5709 MN Helmond (NL); TANKENS, Cornelis, Hendrik, 4281 KE Andel (NL); BEEM, Bob, Alexander, 5709 ME Helmond (NL); JAASMA, Servatius, Alfons, Maria, 5627 TE Eindhoven (NL)
(74) Representative: de Baat, Michiel Anton
(86) International application number: PCT/NL2007/050327
(87) International publication number: WO 2008/004868

(56) References cited:
- EP-A- 0 915 248
- EP-A1- 0 925 438
- EP-A1- 1 095 214
- WO-A-99/61769

## Description

The present invention relates to a system for injecting a vapour which is liquid under pressure in the liquid state, comprising a storage tank for said vapour which is liquid under pressure, a pump which is connected thereto, a supply line which is connected to the pump, an injector connected to the supply line, a return line extending between the injector and said storage tank, fuel-control means for controlling the amount of liquid vapour which is injected by said injector, wherein pump-control means being present for controlling the pump delivery depending on the amount of liquid to be dispensed.

A system of this type is known from WO 99/61769. Patentee has for a considerable time marketed a system under the name LPI in which liquidized vapour is injected into an internal combustion engine in the liquid state. The advantages of such a system include a very accurate control as a result of which the most stringent emission requirements can be met. In addition, with internal combustion engines which can also be powered by petrol, the loss of power is negligible.

With such a system, a pressure regulator is present in the connection between the last injector and the return line or in the return line. In such a manner, it can be ensured that the pressure in the injectors is within the desired range. Patentee has also proposed the use of a pump with a variable delivery so that, when the load on the internal combustion engine is small, i.e. fuel to be injected, the delivery of the pump is smaller than under full load.

It is an object of the present invention to simplify this system and to increase the operational reliability thereof.

This object is achieved with the above-described system in that, during operation, said supply and return lines are connected to one another in continuous flow without a completely closable part, with a restriction being provided in said discharge line which provides a substantially constant through-flow.

According to the present invention, the pressure regulator used hitherto is no longer used. The term pressure regulator is understood to mean a shut-off valve with a variable opening. Depending on the pressure which is detected by the regulator, the size of the variable opening is controlled. If the pressure is insufficient, such a shut-off valve will close completely.

With the present invention, no shut-off valve which can close completely during operation is provided in the system comprising of supply line, injectors, discharge line. According to the present invention, a restriction or flow regulator is present, which, however, provides a permanent, substantially constant through-flow. According to the present invention, with the injectors, the desired pressure is achieved by regulating the pump delivery very accurately. This is in contrast with the prior art, where the pump could only be operated under certain discrete operating conditions, as a result of which it was necessary to use an accurately controllable pressure shut-off valve. By improving the controllability of the pump, this component is now no longer required and thus the reliability of the system can be improved further while reducing the costs thereof.

According to a particular embodiment of the present invention, the pump is, in addition, preferably embodied to provide a relatively limited pressure increase with respect to the pressure prevailing in the tank. The value mentioned is a maximum of approximately 5 bar and more particularly approximately 4 bar with respect to the pressure in the storage tank. As a result, the pump can be of simpler design.

The above-described system has the result that, on average, less fuel circulates, which in turn leads to less heating and, on the other hand, it is still possible to reliably prevent the disadvantageous effect of the creation of vapour bubbles.

According to a particular embodiment of the above-described pump, the latter is embodied as an axial pump. Such a pump comprises a rotor having a large number of chambers which are axially arranged therein. On one side of the rotor, an inlet and an outlet are present while a duct with a cross section which decreases from the inlet towards the outlet is provided on the opposite side. Such a pump operates in a very simple manner and has very few moving parts, as a result of which a great operational reliability is produced.

According to a further variant of the invention, the pump is provided with an electromotor having carbon brushes. Due to the non-flammable mixture in the storage tank, there will be no risk of an explosion or the like in case of spark formation, in particular if the pump is placed in the storage tank.

According to the invention, the restriction is embodied to provide a constant flow. All this can be controlled by the first control means. It is also possible to use a completely independently operating device. More particularly, there is a constant return flow. In this manner, circulation is always ensured. The result thereof may be a variable injection pressure.

If the system is used in combination with a petrol system for an internal combustion engine and more particularly if the system is to be fitted somewhere at a later stage, it is possible to use the information present in the ECU of such a petrol engine in an advantageous manner to control the system.

According to a further advantageous embodiment of the invention, the injectors are not directly connected to the inlet manifold. According to a particular variant in particular with a multi-cylinder engine, these injectors are coupled directly adjacent to one another and a flexible line extends in each case between the injectors and the inlet manifold. As a result, the unit comprising the injectors can be fitted in a particularly compact manner. In addition, less space is required on the inlet manifold to provide the connection to the injectors.

According to a particular embodiment of the invention, small dispensing pipes are provided in the injectors for the liquid fuel. These are provided with insulation in order to prevent freezing up due to the moisture which is present in the inlet air.

In another embodiment of the invention, safety shut-off valves are provided in the supply part of the system. It should be understood that such safety shut-off valves are completely open in operation. As soon as these are closed, the system is shut down.

As regulator for constant flow, a regulator is mentioned with which a flow rate of 10-201/hr is realized.

The invention will be described in more detail below with reference to an exemplary embodiment illustrated in the drawing, in which:
Fig. 1 diagrammatically shows the system according to the invention;
Fig. 2 shows a cross section of a pump used with the system according to the invention;
Fig. 3 shows parts of the pump from Fig. 2, and
Fig. 4 diagrammatically shows an example of a flow regulator.

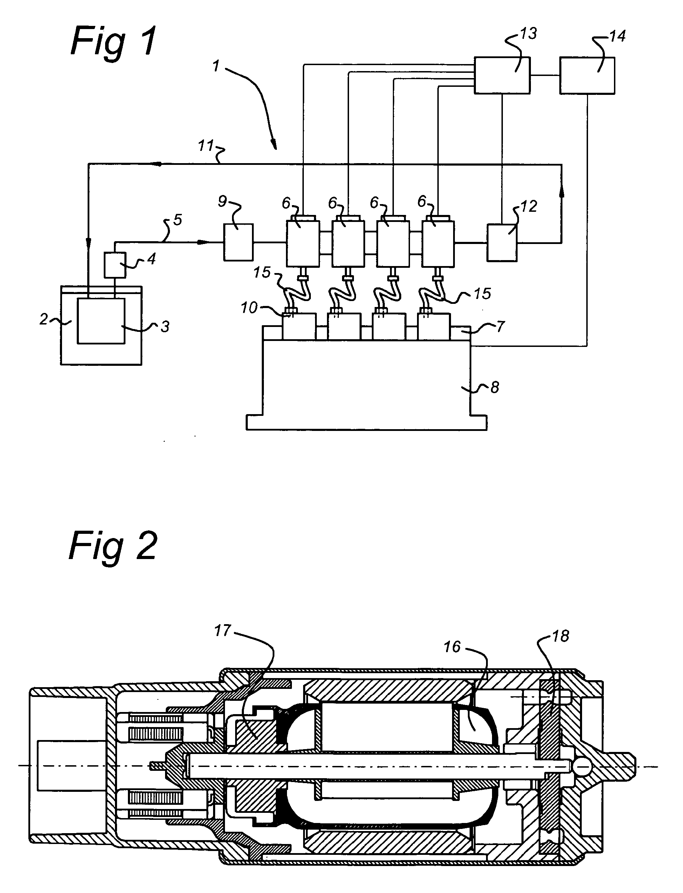

In Fig. 1, the system according to the invention is denoted by reference numeral 1. It comprises a storage tank (2) for a liquidized vapour, such as LPG. However, it should be understood that any liquidized vapour can be used. Examples which may be mentioned are pure propane and butane.

Inside the storage tank (2), a pump (3) is fitted by means of which fuel is drawn out of the tank and pressurized. Via a safety shut-off valve (4), the fuel is pumped into supply line (5). The pressure increase with respect to the tank is in the range of 0.5-5 bar and, more particularly, approximately 3-4 bar. In the supply line, near the internal combustion engine (8) and the injectors (6), a further safety shut-off valve (9) is provided. During operation, safety shut-off valves (4) and (9) are completely open and when out of operation they are completely closed.

Downstream of the safety shut-off valve (9), injectors (6) are connected in series. In this case, the internal combustion engine (8) is a four-cylinder engine which uses four injectors (6). These are electrically connected to a control unit (13).

Downstream of the last injector (6), a return line (11) is arranged in which a restriction (12) is incorporated. The effective cross section of this restriction (12) is variable and is controlled by the control unit (13). It should be understood that in a variant, a restriction (12) can be used having a non-variable through-flow cross sectional area. In both cases, there is always a through-flow connection between the supply line (5) and return line (11) . Return line (11) opens into tank (2).

The injectors (6) are arranged directly next to one another. Between the injectors (6) and the inlet manifold (7) of the combustion engine (8), flexible lines (15) having a length of at least 5 cm extend. These are connected in a very compact manner to the small dispensing pipes (10) which are arranged in the respective suction pipe of the inlet manifold (7). Details thereof have not been shown, but in the part which extends in the air (gas) duct of the inlet manifold (7), they consist of a central part through which the liquid gas is introduced and a part which is arranged around it and insulated with respect thereto. During operation, this insulated part which is arranged around the central part has such a high temperature that there is no ice deposit there from moisture which is present in the air.

Control unit (13) is connected to ECU (14) of the internal combustion engine (8) which is embodied to run on two kinds of fuel, that is to say can in addition be run on petrol, ethanol or the like. If the system is not designed to be run in combination with another fuel system, control unit (13) will be coupled to sensors which indicate the operating parameters of the combustion engine (8). Also in the case of the system illustrated here, separate sensors may be provided in order to supply certain operating parameters of the combustion engine to the control unit (13) and make control possible on the basis thereof.

The system described above functions as follows:

Depending on the desired operating condition, such as, for example, determined by depressing the accelerator pedal in the case of a car engine, a certain amount of liquid fuel will have to be dispensed via the injectors (6). This amount is determined by control unlit (13). Depending on this desired amount, control unit (13) will regulate the delivery of pump (3). According to the invention, this takes place in a very accurate manner. As a result, it is possible to achieve an almost constant return flow through the return line (11). Such a return flow is always necessary in order to be able to pump vapour bubbles out of the supply line (5) and the injectors (6). This means that according to the present invention it is no longer necessary to use a pressure regulator at the restriction (12).

As indicated, it may optionally be possible to influence the effective cross section of the restriction (12) in order to ensure a substantially constant flow through return line (11). All this is dependent on the desired accuracy of the return flow through line (11).

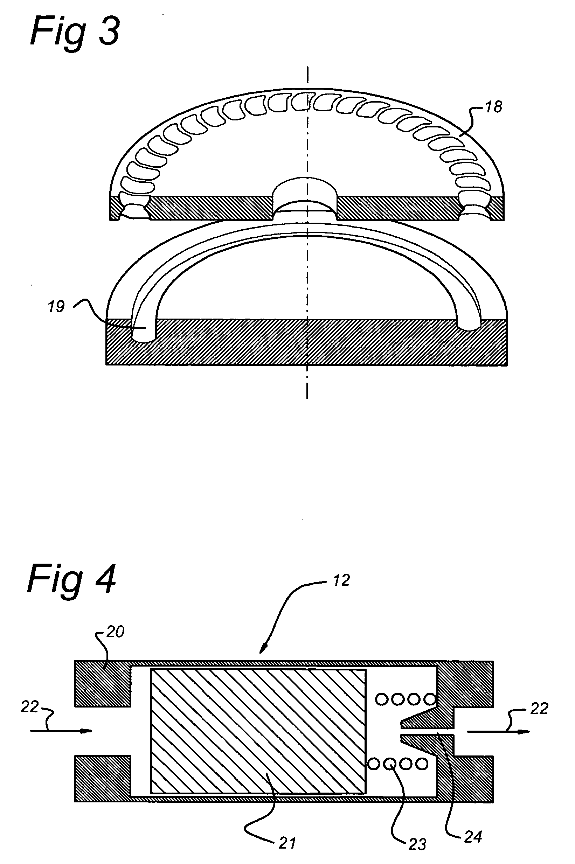

Fig. 4 shows an example of flow regulator 12. It consists of a cylinder 20 in which a piston 21 is provided with a considerable clearance. Arrows (22) indicate the flow direction. In Fig. 4, the piston (21) is pressed to the left by the relatively weak spring (23). The opening with a relatively small bore is indicated by reference numeral (24).

Such a flow regulator works as follows:

Fluid which hits the piston from the left-hand side presses the piston in the direction of the opening (24) against the action of the spring (23). As a result, the flow rate through the opening (24) will decrease and piston (21) will move back to the left as a result of the pressure of the spring (23), which leads to an increase in the flow and as a result of the increased flow the piston (21) will move back to the right in the manner described above.

Such a simple flow regulator (12) is particularly reliable and by means thereof it is possible to maintain, for example, a constant flow of between 10 and 20 litres per hour at greatly varying pressure of the supplied fluid.

Fig. 2 shows the rotor of pump (3). This rotor is indicated by reference numeral (16). Reference numeral (17) denotes carbon brushes which provide a voltage across the windings of the rotor (16) while reference numeral (18) denotes an axial screw. Reference numeral (19) denotes a duct with varying cross section (Fig. 3). A pump of this type has proved to be particularly simple to produce and can be controlled in a very accurate manner.

The variable restriction (12) is designed in such a manner that a constant amount of liquid together with any vapour bubbles present therein is returned independently of the pressure increase caused by the pump (3).

## Claims

1. System (1) for injecting a vapour which is liquid under pressure in the liquid state, comprising a storage tank (2) for said vapour which is liquid under pressure, a pump (3) which is connected thereto, a supply line (5) which is connected to the pump, an injector (6) connected to the supply line (5), a return line (11) extending between the injector (6) and said storage tank (2), fuel-control means for controlling the amount of liquid vapour which is injected by said injector, wherein pump-control means being present for controlling the pump delivery depending on the amount of liquid to be dispensed, wherein, during operation, said supply and return lines are connected to one another in continuous flow without a completely closable part, with a restriction (12) being provided in said return line (11) which provides a substantially constant through-flow, **characterized in that** said restriction in said return line being a flow regulator (12) which is designed to achieve a substantially constant return flow of said liquid vapour.

2. System according to Claim 1, wherein said pump (3) is embodied to provide a pressure increase of at most 5 bar with respect to the pressure in said storage tank.

3. System according to one of the preceding claims, wherein said pump (3) is an axial pump.

4. System according to one of the preceding claims, wherein said pump (3) is an electrical pump provided with carbon brushes (17).

5. System according to one of the preceding claims, wherein said fuel-control means comprise an ECU (14) for a petrol engine.

6. System according to one of the preceding claims, comprising an inlet manifold (7) and wherein two injectors (6) are provided next to one another and in each case a line (15) with a length of at least 5 cm is arranged between said injectors (6) and said inlet manifold (7).

7. System according to one of the preceding claims, comprising a manifold (7) and a dispensing pipe (10) arranged in said manifold and connected to said injector, wherein that part of the dispensing pipe (10) which extends in said manifold and is in contact with the vapour which is liquid under pressure is insulated with respect to the exterior of said dispensing pipe.

8. System according to one of the receding claims, comprising safety shut-off valves (4, 9), provided on the storage tank (2) and fitted at the downstream end of the supply line (5), which safety shut-off valves (4, 9) do not close during operation.

## Patentansprüche

1. System (1) zum Einspritzen eines unter Druck flüssigen Gases im flüssigen Zustand, Folgendes umfassend: einen Speichertank (2) für das unter Druck flüssige Gas, eine mit diesem verbundene Pumpe (3), eine mit der Pumpe verbundene Versorgungsleitung (5), eine mit der Versorgungsleitung (5) verbundene Einspritzvorrichtung (6), eine zwischen der Einspritzvorrichtung (6) und dem Speichertank (2) verlaufende Rückleitung (11), ein Kraftstoff-Steuerungsmittel zum Steuern der Menge an flüssigem Gas, das durch die Einspritzvorrichtung eingespritzt wird, wobei ein Pumpensteuerungsmittel vorhanden ist, um in Abhängigkeit von der Menge der auszugebenden Flüssigkeit die Pumpenleistung zu steuern, wobei während des Betriebs die Versorgungsleitung und die Rückleitung in einem kontinuierlichen Fluss und ohne ein vollständig verschließbares Teil miteinander verbunden sind, wobei in der Rückleitung (11) eine Drosselvorrichtung (12) vorgesehen ist, die einen im Wesentlichen konstanten Durchfluss bereitstellt, **dadurch gekennzeichnet, dass** die Drosselvorrichtung in der Rückleitung ein Durchflussregler (12) ist, der dafür eingerichtet ist, einen im Wesentlichen konstanten Rückfluss des flüssigen Gases zu erreichen.

2. System nach Anspruch 1, wobei die Pumpe (3) dafür eingerichtet ist, eine Druckerhöhung von höchstens 5 Bar in Bezug auf den Druck im Speichertank zu bewirken.

3. System nach einem der vorhergehenden Ansprüche, wobei die Pumpe (3) eine Axialpumpe ist.

4. System nach einem der vorhergehenden Ansprüche, wobei die Pumpe (3) eine elektrische Pumpe ist, die mit einer Karbonbürste (17) ausgestattet ist.

5. System nach einem der vorhergehenden Ansprüche, wobei das Kraftstoff-Steuerungsmittel eine Motorsteuerung (14) für einen Benzinmotor umfasst.

6. System nach einem der vorhergehenden Ansprüche, das einen Ansaugstutzen (7) umfasst, wobei zwei Einspritzvorrichtungen (6) nebeneinander liegend vorgesehen sind und wobei für jede von diesen zwischen der Einspritzvorrichtung (6) und dem Ansaugstutzen (7) eine Leitung (15) mit einer Länge von wenigstens 5 cm eingerichtet ist.

7. System nach einem der vorhergehenden Ansprüche, das einen Ansaugstutzen (7) umfasst, sowie ein Ausgaberohr (10), das im Ansaugstutzen angeordnet und mit der Einspritzvorrichtung verbunden ist, wobei der Teil des Ausgaberohrs (10), der sich im Ansaugstutzten erstreckt und der in Kontakt mit dem unter Druck flüssigen Gas ist, in Bezug auf das Äußere des Ausgaberohrs isoliert ist.

8. System nach einem der vorhergehenden Ansprüche, das Sicherheitsabsperrventile (4, 9) umfasst, die am Speichertank (2) vorgesehen sind und am strömungsabwärts liegenden Ende der Versorgungsleitung (5) eingebaut sind, wobei diese Sicherheitsabsperrventile (4, 9) während des Betriebs nicht schließen.

## Revendications

1. Système (1) pour injecter une vapeur qui est liquide sous pression à l'état liquide, comprenant un réservoir de stockage (2) pour ladite vapeur qui est liquide sous pression, une pompe (3) qui y est raccordée, une conduite d'alimentation (5) qui est raccordée à la pompe, un injecteur (6) raccordé à la conduite d'alimentation (5), une conduite de retour (11) s'étendant entre l'injecteur (6) et ledit réservoir de stockage (2), des moyens de contrôle de combustible pour contrôler la quantité de vapeur de liquide qui est injectée par ledit injecteur, dans lequel les moyens de contrôle de pompe sont présents pour contrôler la distribution de la pompe en fonction de la quantité de liquide à distribuer, dans lequel, pendant le fonctionnement, lesdites conduites d'alimentation et de retour sont raccordées entre elles selon un écoulement continu sans partie complètement refermable, avec une restriction (12) qui est prévue dans ladite conduite de retour (11), qui fournit un écoulement sensiblement constant, **caractérisé en ce que** ladite restriction dans ladite ligne de retour est un régulateur de débit (12) qui est conçu pour obtenir un débit de retour sensiblement constant de ladite vapeur de liquide.

2. Système selon la revendication 1, dans lequel ladite pompe (3) est mise en oeuvre pour fournir une augmentation de pression d'au maximum 5 bar par rapport à la pression dans ledit réservoir de stockage.

3. Système selon l'une quelconque des revendications précédentes, dans lequel ladite pompe (3) est une pompe axiale.

4. Système selon l'une quelconque des revendications précédentes, dans lequel ladite pompe (3) est une pompe électrique prévue avec des balais en carbone (17).

5. Système selon l'une quelconque des revendications précédentes, dans lequel lesdits moyens de contrôle de combustible comprennent une ECU (14) pour un moteur essence.

6. Système selon l'une quelconque des revendications précédentes, comprenant un collecteur d'entrée (7) et dans lequel on prévoit deux injecteurs (6) l'un à côté de l'autre et dans chaque cas, une conduite (15) avec une longueur d'au moins 5 cm est agencée entre lesdits injecteurs (6) et ledit collecteur d'entrée (7).

7. Système selon l'une quelconque des revendications précédentes, comprenant un collecteur (7) et un tuyau de distribution (10) agencé dans ledit collecteur et raccordé audit injecteur, dans lequel cette partie du tuyau de distribution (10) qui s'étend dans ledit collecteur et est en contact avec la vapeur qui est liquide sous pression, est isolée par rapport à l'extérieur dudit tuyau de distribution.

8. Système selon l'une quelconque des revendications précédentes, comprenant des soupapes d'arrêt de sécurité (4, 9), prévues sur le réservoir de stockage (2) et montées au niveau de l'extrémité aval de la conduite d'alimentation (5), lesquelles soupapes d'arrêt de sécurité (4, 9) ne se ferment pas pendant le fonctionnement.
